# EUROPEAN PATENT APPLICATION

(11) **EP 4 723 553 A1**
(43) Date of publication of application: **08.04.2026**
(21) Application number: 25182185.6
(22) Date of filing: 11.06.2025
(51) Int. Cl.: H04L 9/40, H04W 12/106, H04W 12/108

(54) **NETWORK-RELATED ANALYSIS USING CONNECTED DEVICE GENERATED UNIQUE IDENTIFIER**

(30) Priority: 01.10.2024 US 202463701609 P
(71) Applicant: Cujo LLC, Covina, CA 91723 (US)
(72) Inventor: Olden, Magnus, 0349 Oslo (NO); Pykälä, Timo, 02150 Espoo (FI)
(74) Representative: Marks & Clerk LLP

(57) **Abstract**

An application executing in a connected device generates (102) a unique identifier. The unique identifier is inserted (110) into network traffic transmitted from the connected device to a target network element via an Internet access network element. In response to a monitoring system detecting (116) the unique identifier from the network traffic, the unique identifier is used (124) for a subsequent network-related analysis operation.

## Description

### FIELD

The invention relates to a method, apparatus, computer program product, and computer-readable medium.

### BACKGROUND

Network application programming interfaces (APIs) have emerged as a key technology that enables user equipment to request information and capabilities from the network infrastructure. Numerous use cases highlight the potential for applications (or apps) running on the user equipment (such as smartphones, tablets, or other Internet-connected devices) to request enhanced network performance or obtain network performance insights. However, traditional network architectures separate networks into independent layers and planes, creating significant challenges for app-based interactions with network links. Applications cannot inherently identify the network they are connected to, nor can network equipment reliably associate a specific app session with a particular network link. The lack of a unique, network-recognizable identifier for apps further exacerbates this issue. Operating systems have access to network-related identifiers like Media Access Control (MAC) addresses, external Internet Protocol (IP) addresses, and mobile device identifiers such as International Mobile Equipment Identity (IMEI) or Subscriber Identification Module (SIM) numbers. However, these identifiers do not exist at the application level, which leads to challenges in app-based network requests. In addition, exposing app-specific or user-specific data introduces significant privacy and security concerns. MAC randomization makes device identification more difficult. Further sophistication for the use of unique identifiers is desirable.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1A and FIG. 1B are flowcharts illustrating examples of a method;
FIG. 2 is a block diagram illustrating example implementation environments for the method;
FIG. 3A and FIG. 3B are block diagrams illustrating examples of a cybersecurity apparatus;
FIG. 4 is a block diagram illustrating an example of a connected device;
FIG. 5 is a block diagram illustrating an example of a computing resource; and
FIG. 6A and FIG. 6B are block diagrams illustrating examples of an Internet access network element.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

The described method allows an application on a connected device, such as a smartphone or smart appliance, to generate a unique identifier and insert it into regular internet traffic, like a website lookup or a secure connection request. Network monitoring systems may detect this unique identifier, determine which network the device is using, and collect useful information about that connection, such as speed, reliability, or potential issues. That information is then sent to a secure cloud service, where the application may later retrieve it using the same unique identifier. This approach helps applications understand and improve network performance while protecting user privacy and avoiding the need to share personal data. The unique identifier may also be used to identify the connected device as it connects to the network.

As used herein, the term "unique identifier" encompasses the concept of a "unique token" as described in the US provisional application number 63/701,609, and may include any data element that uniquely identifies a device, application, or network link. The US provisional application relates to the field of network communication and application network interaction, more specifically to a method for inserting a token into network traffic to enable the pairing of applications running on a network to a network link while preserving user privacy and ensuring network security. The US provisional application introduces a novel method for app- generated tokens to be inserted into network traffic. These tokens may be detected by network equipment, which may then share anonymized network capabilities and performance data with the app, ensuring the privacy of the app and its user throughout the process.

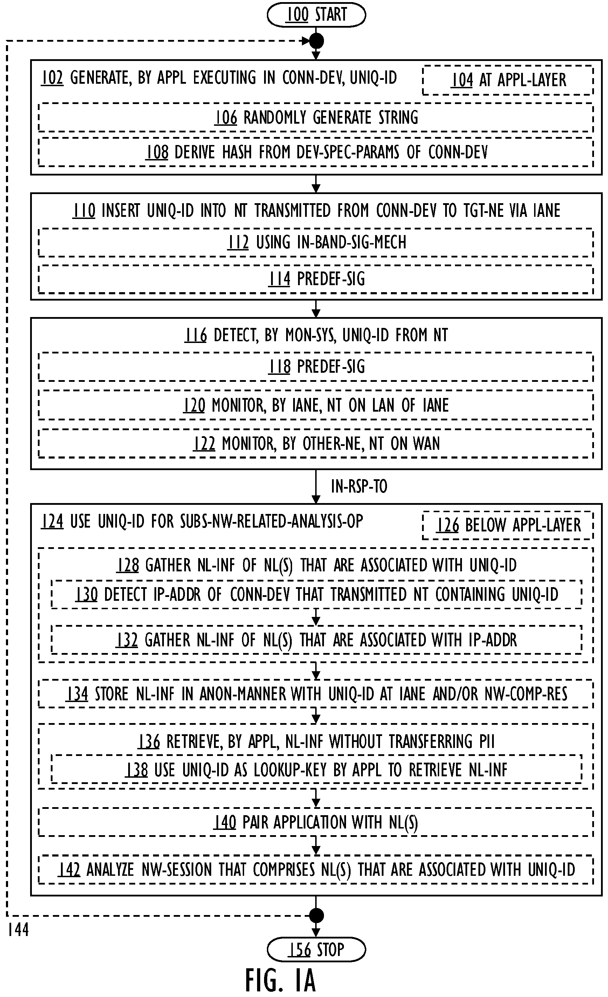

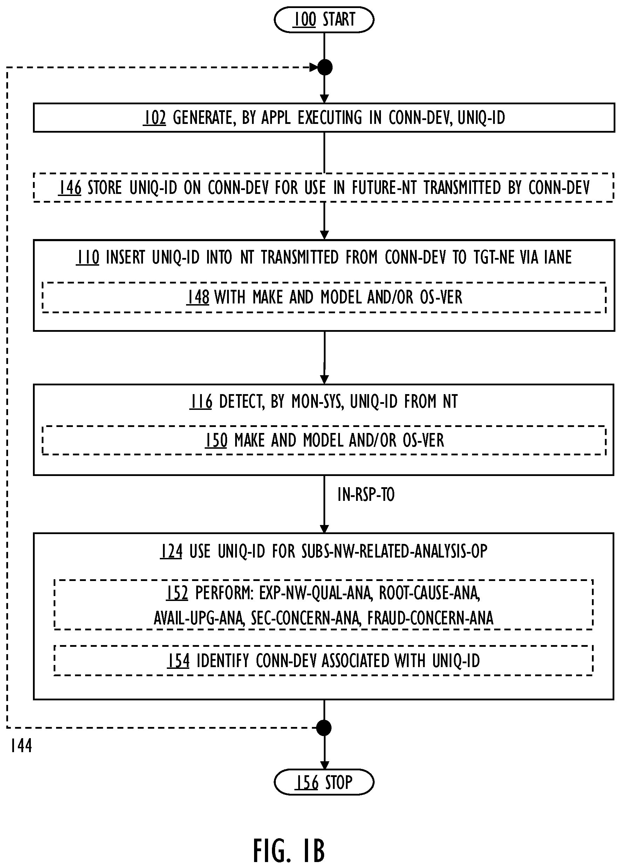

FIG. 1A and FIG. 1B are flowcharts illustrating examples of a computer-implemented method. The method performs operations related to a network-related analysis using a connected device generated unique identifier. The method starts in 100 and ends in 156. The method may run in principle endlessly. The infinite running may be achieved by looping 144 back.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

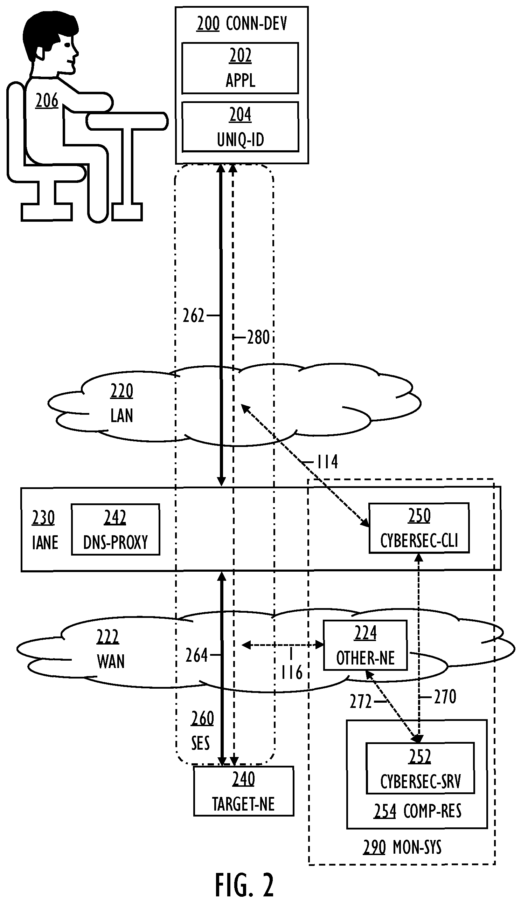

FIG. 2 is a block diagram illustrating example implementation environments for the computer-implemented method. The method may operate within a connected device 200 and a monitoring system 290. The monitoring system 290 may comprise hardware and software in one or more network elements, including, but not being limited to an Internet access network element 230, a computing resource 254, and another network element 224.

An application 202 executing in a connected device 200 generates 102 a unique identifier 204.

In an example, the unique identifier 204 is persistent across multiple network sessions and is generated and managed by the application 202 executing on the connected device 200. Unlike hardware Media Access Control (MAC) addresses or randomized MAC addresses generated by an operating system of the connected device 200, the unique identifier 204 is application-specific, anonymous, and inserted into the network traffic 280 at the application layer of a protocol stack in the connected device 200.

The application 202 may implement the generation 102 of the unique identifier by randomly generating 106 a string, or by deriving 108 a hash from one or more device-specific parameters of the connected device 200. Alternatively, these methods may also be combined so that a part of the identifier string is randomly generated, and a part of the identifier string is the hash.

The unique identifier 204 is inserted 110 into network traffic 280 transmitted from the connected device 200 to a target network element 240 via an Internet access network element 230. The target network element 240 may be a remote server running an appropriate hosting software.

A monitoring system 290 detects 116 the unique identifier 204 from the network traffic 280. This may be implemented so that the Internet access network element 230 monitors 120 the network traffic 280 on a local area network (LAN) 220 of the Internet access network element 230. Alternatively, or additionally, this may be implemented so that another network element 224 monitors 122 the network traffic 280 on a wide area network WAN 222.

In response to detecting 116 the unique identifier 204 from the network traffic 280, the unique identifier 204 is used 124 for a subsequent network-related analysis operation.

As used herein, the term "subsequent network-related analysis operation" refers to any process that uses the detected unique identifier 204 to analyze network behavior or to identify, associate, or characterize the connected device 200 within a network.

In an example, the application 202 executing in the connected device 200 generates 102 the unique identifier 204 at an application layer 104, and the unique identifier 204 is used 124 for the subsequent network-related analysis operation below the application layer 126, at a network layer and/or at a data link layer, for example.

In the present context, the application layer, network layer, and data link layer each play a role in how the unique identifier 204 is generated, transmitted, and detected. The application layer is where the identifier is created by the application 202 running on the connected device 200, and embedded into standard protocol messages such as DNS requests or HTTP headers. The unique identifier 204 then travels through the network layer, where it is encapsulated within IP packets and routed across the Internet toward the target network element 240, such as the DNS proxy server. The data link layer handles the local transmission of these packets over physical media (Ethernet or Wi-Fi, for example), using MAC addresses to deliver the data between devices on the same network segment. The monitoring system 290 may observe traffic at any of these layers, but the unique identifier 204 itself is inserted at the application layer and detected by analyzing traffic as it flows through the network and data link layers. This layered approach enables the method to operate transparently within the existing network infrastructure.

In an example, the unique identifier 204 is inserted 110, 112 using an in-band signaling mechanism into the network traffic 280 transmitted from the connected device 200 to the target network element 240 via the Internet access network element 230.

The "in-band signaling" refers to a communication technique where control or signaling information is transmitted within the same channel or data stream as the primary content. Unlike out-of-band signaling, which uses a separate path for control data, in-band signaling embeds metadata or identifiers directly into the regular flow of communication. This approach is often used in networking and telecommunications to simplify infrastructure and reduce the need for additional signaling channels. In traditional systems, in-band signaling was used to transmit control tones or commands within the same audio path as voice data, such as in early telephone networks. While this made systems easier to implement, it also introduced certain vulnerabilities. In modern digital networks, in-band signaling may be used more securely and flexibly, especially when combined with encryption or protocol-specific embedding techniques.

In the present context, in-band signaling refers to the insertion of the unique identifier 204 into standard network traffic 280, such as Domain Name System (DNS) requests, Hypertext Transfer Protocol (HTTP) requests, or Transport Layer Security (TLS) handshakes (commonly used in HTTP Secure (HTTPS) connections), originating from the connected device 200. The unique identifier 204 is transmitted alongside the normal data payload, allowing the monitoring system 290 to detect and extract the unique identifier 204 without requiring a separate communication channel. In some examples, the in-band signaling mechanism may include embedding the unique identifier 204 within standard protocol exchanges such as DNS requests or TLS handshakes. However, the examples are not limited to these protocols and may include any mechanism where the unique identifier 204 is transmitted within the same data stream as the primary communication payload. This enables efficient and scalable network analysis and device identification while preserving privacy and minimizing infrastructure complexity.

In an example, the unique identifier 204 is inserted 110, 114 with a predefined signal recognizable by the monitoring system 290 into the network traffic 280 transmitted from the connected device 200 to the target network element 240 via the Internet access network element 230, and the monitoring system 290 detects 116, 118 the predefined signal recognizable by the monitoring system 290 and the unique identifier 204 from the network traffic 280.

In an example, the value of the unique identifier 204 is "1a2s3d". As DNS only resolves domain names, the unique identifier 204 may be embedded in the subdomain, making it visible to DNS resolvers and the monitoring system 290, so the DNS request may contain the following: "1a2s3d.tokeninsertion.com". In this example, the predefined signal that is searched is "tokeninsertion.com". DNS-based signaling is lightweight and easy to implement. It works well in controlled environments or with cooperative DNS infrastructure. However, it faces practical limitations regarding visibility (DNS queries only expose domain names, not paths), filtering (public resolvers or firewalls may block or alter non-standard queries) and privacy protocols (DNS-over-HTTPS (DoH) or DNS-over-TLS (DoT) may obscure DNS traffic from intermediate systems).

If the DNS is used, the target network element 240 to which the connected device 200 transmits the network traffic 280 may be a DNS proxy server maintained by a network service provider. This DNS proxy server may also be co-located with or operate within the Internet access network element 230. The DNS proxy server 240, 242 may maintain a DNS cache that stores DNS records for domain names previously accessed by a plurality of different connected devices 200. When a DNS request is received, the DNS proxy server 240, 242 first checks its local cache for the corresponding IP address. If the requested domain name is not found in the cache, the DNS proxy server 240, 242 initiates a series of interactive DNS queries with upstream DNS servers (not illustrated in FIG. 2) to resolve the domain name. Once the resolution process is complete, the DNS proxy server 240, 242 responds to the original request with a DNS response message that includes the Fully Qualified Domain Name (FQDN) and the resolved IP address. This setup not only improves DNS resolution efficiency but also provides a convenient point for detecting the unique identifiers 204 embedded in DNS queries.

To overcome DNS limitations, HTTP or TLS signaling may alternatively be used. The unique identifier 204 may be embedded in the TLS Server Name Indication (SNI) field like this "1a2s3d.tokeninsertion.com", or in the HTTP request path or headers like this "GET /WELL_KNOWN_SIGNAL/1a2s3d". In these examples, the predefined signals that are searched are "tokeninsertion.com" and "WELL_KNOWN_SIGNAL". This allows network equipment, especially TLS-terminating proxies or cloud services, to detect the signal and extract the unique identifier. TLS SNI is visible during handshake before encryption. HTTP headers are visible if TLS is terminated or inspected by a proxy. HTTP/TLS offers several benefits including richer payloads (may carry more metadata than DNS), encryption support (TLS provides confidentiality), cloud-native compatibility (works well with modern infrastructure like CDNs and reverse proxies), less likely to be blocked (HTTPS traffic is generally allowed through firewalls). Despite its strengths, HTTP/TLS signaling has trade-offs such as encryption limits visibility (only the SNI is visible unless TLS is terminated), infrastructure dependency (requires cooperation from TLS-terminating systems), and privacy concerns (HTTP payloads may contain sensitive data if not handled carefully).

Both DNS and HTTP/TLS signaling methods are valid and may be used depending on the deployment context. DNS is simpler but limited in visibility and flexibility. HTTP/TLS is more robust and secure but requires more infrastructure. The flexibility in supporting both methods enhances its applicability across diverse network environments.

To detect the unique identifier 204 embedded in the network traffic 280 using the in-band signaling mechanism, the monitoring system 290 may first capture packets using tools like Wireshark^{®} or tcpdump at various points such as at the Internet access network element 230 or a network monitoring server 224. The monitoring system 290 then parses specific protocol fields depending on where the identifier is inserted, for example, within a domain name in a DNS request, the SNI field in a TLS handshake, or a custom HTTP header. The monitoring system 290 may use pattern matching or predefined formats to extract the unique identifier 204 from the network traffic 280, and once detected, the monitoring system 290 may log the unique identifier 204 along with metadata such as timestamps and IP addresses, enabling further analysis like device identification, session tracking, or network diagnostics.

The described method may be used in connection with a quality of outcome (QoO) evaluation. Embedding the unique identifier 204 into the network traffic 280 enables precise tracking of user experience by linking specific sessions or connected devices 200 to observed network conditions. This approach allows for detailed correlation between performance metrics, such as latency, jitter, and packet loss, and the actual experience of users 206, particularly in sensitive applications like cloud gaming or video conferencing. By associating the unique identifiers 204 with different types of connected devices 200 and application behavior, network service providers may evaluate and improve the quality of outcome across diverse usage scenarios without relying on personal data.

The described method may also be used in connection with a network analysis. Using the unique identifiers 204 embedded in recognizable protocol elements allows for seamless tracking of network traffic 280 across both local area networks 220 and wide area networks 222. This facilitates comprehensive flow analysis, identification of performance bottlenecks, and root cause diagnostics. The ability to gather and store link-level information tied to each unique identifier 204 supports ongoing network health monitoring, upgrade planning, and security assessments, all while maintaining a non-intrusive and scalable monitoring strategy.

In the example of FIG. 2, the network traffic 280 may be analyzed to detect one or more network links 262, 264 that form a network session 260. The network link 262, 264 refers to a physical or logical connection between two network nodes, and it is about connectivity and transmission characteristics (signal strength, bandwidth, and latency, for example). The connected device 200 may have a wireless network link (over Wi-Fi, for example) 262, or a wired network link (through Ethernet cable, for example) 262 to the Internet access network element 230. The Internet access network element 230 may have a wired network link 264 to the target network element 240. The network session 260 refers to a logical communication exchange between two endpoints (in our example between the connected device 200 and the target network element 240) over the network 220, 222, and it is about application-level interaction, which may span multiple links or hops. Examples of the network session 260 are a video call, a file download, or a cloud gaming session.

The network link information refers to the set of data collected and associated with the unique identifier 204 embedded in the network traffic 280. This information may characterize the connection 262 between the connected device 200 and the network 220 at the time the unique identifier 204 is detected. The network link information may include the connected device's 200 IP address, the MAC address (including the OUI portion to infer manufacturer), the type of network interface (Wi-Fi or Ethernet, for example), and the Internet access network element 230 through which the connected device 200 is connected. Additionally, the network link information may capture performance metrics such as latency, packet loss, and throughput, as well as capabilities like supported protocols (IPv6 and TLS, for example), bandwidth capacity, and Quality of Service (QoS) configurations. This network link information enables the monitoring system 290 to perform advanced network-related analysis operation, such as identifying performance bottlenecks, diagnosing connectivity issues, or assessing upgrade opportunities, without requiring personally identifiable information, thereby supporting both operational insight and user privacy.

In an example, the subsequent network-related analysis operation is directed to an analysis of the network traffic 280 by gathering 128 network link information of one or more network links 262, 264 that are associated with the unique identifier 204. This may be implemented so that an IP address of the connected device 200 that transmitted the network traffic 280 containing the unique identifier 204 is first detected 130, and then the network link information of the one network link 262, 264 that are associated with the IP address is gathered 132. The network link information may be stored 134 in an anonymized manner with the unique identifier 204 at the Internet access network element 230, and/or at a networked computing resource 254. The application 202 may retrieve 136 the network link information without transferring personally identifiable information (PII). The retrieval 136 may be implemented so that the unique identifier 204 is used 138 as a lookup key by the application 202 to retrieve the network link information. The application 202 may be paired 140 with the one or more network links 262, 264, and in this way the specific network traffic 280 of the application 202 may be detected and analyzed. The unique identifier 204, as it is paired with the one or more network link 262, 264, also becomes paired with a network session 260 of the application 202, and the unique identifier 204 consequently acts as an identifier of the network session 260 of the application 202.

In an example, a network session 260 that comprises the one or more network links 262, 264 that are associated with the unique identifier 204 are analyzed 142. This enables the analysis of the network session 260 by associating it with the unique identifier 204 that is embedded in the network traffic 280 generated by the connected device 200. The network session 260 refers to a logical communication exchange, such as a video stream, file transfer, or cloud gaming session, between the connected device 200 and the remote target network element 240 over the Internet 222. This network session 260 is supported by one or more network links 262, 264, which are the physical or logical connections that carry the data. In FIG. 2, the network session 260 traverses the wireless link (WLAN) 262 between the connected device 200 and the local Internet access network element 230, and the wired network link (WAN) 264 between the Internet access network element 230 and the remote target network element 240.

By analyzing the network session 260 in the context of these underlying network links 262, 264, the method allows for a more complete understanding of how network conditions affect application performance. The unique identifier 204 serves as a persistent, anonymized reference that enables the monitoring system 290 to correlate session-level characteristics, such as duration, throughput, or error rates, with link-level metrics like latency, jitter, and packet loss. This correlation supports a wide range of diagnostic and quality evaluation use cases, including identifying performance bottlenecks, assessing user experience, and detecting anomalies.

Optionally, the analysis 142 of the network session 260 may comprise operations of detecting session-level 260 metrics, correlating them with link 262, 264 data, and deriving insights such as quality of experience scores or root cause indicators. These operations enhance the value of the analysis 142 by enabling applications 202 or network operators to make informed decisions, such as recommending upgrades, adjusting service parameters, or flagging potential security or fraud concern, based on a comprehensive view of both the session 260 and the transport environment 262, 264 it relies on.

The network link information as well as other information obtainable by the described operations may be used for performing 152 one or more of an expected network quality analysis, a root cause analysis, an available upgrade analysis, a security concern analysis, and a fraud concern analysis.

The described method may be applied to support the expected network quality analysis by enabling the association of the unique identifier 204 with the characteristics of the network links 262, 264 used by the connected device 200, specifically, the wireless WLAN link 262 between the connected device 200 and the Internet access network element 230, and the wired WAN link 264 between the Internet access network element 230 and the target network element 240. By analyzing these network links 262, 264, the monitoring system 290 may estimate the expected performance of the network sessions 260 that traverse both network segments 220, 222. Applications 202 may retrieve this anonymized data to anticipate user experience and adjust their behavior accordingly, all while preserving privacy.

The described method may be applied to support the root cause analysis by linking the network session 260, which spans both the WLAN and WAN network links 262, 264, to the persistent unique identifier 204 and the performance metrics of each network link 262, 264. When the network session 260 experiences degraded performance, the monitoring system 290 may trace the issue back to specific link-level conditions, such as interference on the wireless segment 262 or congestion on the wired path 264. This layered visibility enables accurate identification of the source of the problem across the full network session path.

The described method may be applied to support the available upgrade analysis by associating the unique identifier 204 of the connected device 200 with the performance characteristics of both the used WLAN and WAN links 262, 264. By comparing these metrics against known service capabilities or infrastructure benchmarks, the monitoring system 290 may determine whether a better-performing configuration, such as a higher-tier broadband plan, a newer router, or improved Wi-Fi coverage, is available. This helps identify upgrade opportunities that would enhance the quality of future network sessions 260 across both network links 262, 264.

The described method may be applied to support the security concern analysis by enabling persistent, anonymized tracking of connected device 200 behavior across network sessions 260 that traverse both WLAN and WAN links 262, 264. If the connected device 200 begins to exhibit suspicious activity, such as abnormal traffic patterns, protocol misuse, or connections to malicious domains, these behaviors may be flagged and correlated with the unique identifier 204. This allows for early detection of potential security threats, with visibility into both local 220 and upstream 222 network segments, while maintaining user anonymity.

The described method may be applied to support the fraud concern analysis by linking the network sessions 260, which span the WLAN and WAN links, 262, 264, to a consistent, anonymized unique identifier 204 that reflects device-specific traits. This enables detection of fraudulent behaviors such as device spoofing, repeated access attempts from varying locations, or manipulation of network parameters across either network link 262, 264. The unique identifier 204 provides a stable reference point for behavioral analysis without relying on personally identifiable information.

The described method may also be used in connection with device identification. In device identification, an identity of the connected device 200 is detected. Network traffic 280 from the connected device 200 may be monitored to perform the device identification. Privacy features, such as MAC randomization make the device identification more difficult. Even if the device fingerprinting succeeds, the device identification may not be 100% certain. Generating and embedding the unique identifiers 204 derived from device-specific parameters or random values provides a reliable method for distinguishing the connected devices 200 on the network 220. These unique identifiers 204 may persist across sessions and IP address changes, and may be enriched with metadata such as device make, model, and operating system version. This enables accurate connected device recognition for purposes such as policy enforcement, targeted support, and traffic segmentation, all while preserving user privacy.

The described method may also be used in connection with device intelligence. By associating the unique identifiers 204 with observed network behavior and device metadata, it becomes possible to build detailed profiles of connected devices 200 over time. This includes insights into device capabilities, usage patterns, and performance characteristics. Such knowledge supports network optimization, security monitoring, and service personalization, enabling operators to better understand the connected environment without requiring access to personally identifiable information.

In an example, the described operations may be used for a device identification process, by identifying 154 the connected device 200 associated with the unique identifier 204.

The unique identifier 204 may be stored 146 on the connected device 200 for use in future network traffic 280 transmitted by the connected device 200.

In addition to the unique identifier 204, also other data relevant to the device identification and device intelligence may be transferred. In an example, the unique identifier 204 with a make (such as Apple^{®}) and a model (such as iPhone^{®} 15) of the connected device 200, and/or an operating system version (such as iOS 18.5) of the connected device 200 are inserted 110, 148 into the network traffic 280 transmitted from the connected device 200 to the target network element 240 via the Internet access network element, 230, and the monitoring system 290 then detects 116, 150 the unique identifier 204 and the make and the model of the connected device 200, and/or the operating system version of the connected device 200 from the network traffic 280.

The application 202 executing on the connected device 200 may be a cybersecurity application performing an initial device registration in co-operation with a cybersecurity client 250 operating in the Internet access network element 230, optionally augmented by a cybersecurity server 252 operating in a networked computing resource 254 (such as a processing cloud). The connected device 200 may independently (or in some way augmented by the cybersecurity client 250 or the cybersecurity server 252), using a predetermined generation algorithm, generate the unique identifier 204.

As a result of the device registration, the cybersecurity client 250 (and the cybersecurity server 252) knows the true identity of the connected device 200. During the initial device registration, the unique identifier 204 is assigned to the connected device 200.

The unique identifier 204 is first communicated from the connected device 200 to the cybersecurity client 250 or cybersecurity server 252 using the in-band signaling mechanism. Later, the cybersecurity application 202 causes that the connected device 200, while communicating with a network 220 of the Internet access network element 230, signals its unique identifier 204 using the in-band signaling mechanism, and the cybersecurity client 250 or the cybersecurity server 252 then captures the signaling and detects the unique identifier 204.

The in-band signaling mechanism may operate as described earlier. Furthermore, the in-band signaling mechanism may be implemented in a message transmitted from the connected device 200 to the Internet access network element 230 in the network traffic 280. The message may relate to an artificial target website, i.e., the target network element 240 does not exist in reality. The artificial target website address may contain a specific string (= predefined signal as explained earlier) that may be used to detect that the address is actually an encoded identity of the connected device 200, for example "CUJOAI". The artificial target website address may contain an appropriate character set, such as characters including numbers 0-9, letters A-Z, and a hyphen (-), meaning that there are 37 different characters.

Let us suppose that we use 10 different characters in addition to "CUJOAI" for the unique identifier 204. The number of different combinations is then 37¹⁰ = 4 808 584 372 417 849. In other words, with 16 characters a globally unique identifier is certainly achieved. Even with 8 characters (without the use of CUJOAI), the number of different combinations is more than adequate 37⁸ = 3 512 479 453 921. Note that the artificial target website does not exist in reality in this case. In order to prevent an eventual false identification (= the connected device 200 really wants to access the website, which then accidentally matches with the artificial target website), the specific string ("CUJOAI", for example) may be needed. Also, a specific domain, such as COM, may be needed to ensure that the accidental matching is avoided.

The artificial target website address may be expressed as a Fully Qualified Domain Name (FQDN), which can be 255 characters long. So, there is ample room for the unique identifier 204 and all needed device and user specific data. The device and user specific data may be encoded and hashed to compress the data. Note that the FQDN may contain letters, numbers and hyphens, so the character set is 37 characters. Note also that a number or letter must take the first position on each label of FQDN.

As the artificial target website is captured in the network by the monitoring system 290, possibly using a cybersecurity surveillance operation (possibly in co-operation with a DNS server), the cybersecurity client 250 eventually aided by the cybersecurity server 252 then finds out the initially assigned true identity by matching the captured unique identifier 204 with unique identifiers stored in a database.

If the artificial target website is transmitted over an encrypted protocol, the interception needs to be done in a (local) DNS cache or a DNS server, which is accessible by the cybersecurity client 250 and/or the cybersecurity server 252. If needed, the artificial target website and eventual other information may be encrypted with a public encryption key of the cybersecurity client 250 or the cybersecurity server 252 by the connected device 200.

If the connected device 200 independently generates the unique identifier 204 with the specific generation algorithm, the easiest way is to access the Organizationally Unique Identifier (OUI) portion of a MAC address of the connected device 200, as it is globally unique.

Besides a globally unique identifier, the artificial target website address may contain other data, such as a username (such as "Timo"), device type (such as phone), manufacturer (such as Apple^{®}), model (such as iPhone 15^{®}), OS version (such as iOS 18.5), etc., all of which may be encoded into the artificial target website. If the unique identifier 204 is the OUI MAC address, the randomized MAC addresses, if they may be accessed in the connected device 200 after their creation, may be signaled with the OUI MAC address using the described in-band signaling mechanism encapsulated inside the artificial target website address.

If the OUI MAC address is not available, the predetermined generation algorithm may generate a random unique identifier 204. Let us suppose that we use 32 characters for the random unique identifier, then the number of different unique identifiers is 37³² = 1.52 x 10⁵⁰. Let us suppose that we have 60 milliard connected devices globally, i.e., 6 x 10⁹. Then the chances of collision are 6 x 10⁹ / 1.52 x 10⁵⁰ = 3.95 x 10⁻⁴¹, i.e., virtually non-existent.

The artificial target website may contain a flag field indicating whether this is the initial device registration, or an access after the initial device registration has already been performed. Furthermore, the flag field may indicate that the user 206 of the connected device 200 just started a connection 280 to the Internet access network element 230, and, eventually, that the user 206 of the connected device 200 is about to end the connection 280 to the Internet access network element 230. However, the in-band signaling mechanism may, besides using the FQDN, be based on other available protocols used for common website operations. If feasible, a browser extension may run automatically in the background on the connected device 200 to perform the device identification signaling for each browsing session as described.

Using the described method, device identification is enabled by simple means regardless of any privacy features, or a use of radio frequency fingerprinting, for example. However, if those other device identification means are available, then the method may augment them by providing an accurate and reliable device identification.

The network traffic 280 refers to a flow of data packets across a network between the connected device 200 and the target network element, encompassing all types of data transmitted and received by devices connected to the network. This includes data generated by applications, services, and protocols that facilitate communication between devices. Network traffic 280 may be categorized based on various criteria, such as the type of data being transmitted (e.g., video, audio, text), the source and destination of the data, and the protocols used for the transmission.

The network traffic 280 is typically measured in terms of bandwidth, which is the amount of data transmitted per unit of time, usually expressed in Megabits per second (Mbps). Key parameters that characterize the network traffic 280 also include a latency, a jitter, and a packet loss rate.

The network traffic 280 comprises a process of sending and receiving data packets between the connected device 200 and the Internet access network element 230. This transmission is governed by various networking standards, including Ethernet (IEEE 802.3) for wired connections and Wi-Fi^{®} (IEEE 802.11) for wireless connections. The connected device 200 may support various Wi-Fi^{®} standards, including, but not being limited to the IEEE^{®} 802.11a/b/g/n/ac/ax (Wi-Fi 6), Wi-Fi 6E and Wi-Fi 7. These standards determine the speed, range, and frequency bands (2.4 GHz, 5 GHz, and 6 GHz) for the network traffic 280.

As used herein, the term "connected device" 200 refers to a physical computing device with communication capabilities.

As used herein, the term "Internet access network element" 230 refers to a physical device providing the local area network 220 for the connected device 200 and an access for the connected device 200 to the Internet 222.

The network traffic 280 may be transferred over a wireless connection between the connected device 200 and the Internet access network element 230. Alternatively, the network traffic 280 may be transferred over a wired connection between the connected device 200 and the Internet access network element 230. The connection is first established between the connected device 200 and the Internet access network element 230. Next, the network traffic 280 may extend from the connected device 200 via the local area network 220 and the Internet 222 to the target network element 240. The establishment of the connection may also require a communication with the DNS proxy server 242.

In the network traffic 280, data packets may be transferred from and to the connected device 200. In an example, the Internet access network element 230 is configured to generate a wireless non-cellular internet access network 220. The Internet access network element 230 may be configured to operate at a home or an office of a user 206 of the connected device 200. Alternatively, the Internet access network element 230 may be configured to operate in a public place.

Next, let us study how a cybersecurity operator is capable of monitoring the network traffic 280 using the monitoring system 290.

First, the network traffic between the connected device 200 and the Internet access network element 230 is monitored. The application 202, such as a web browser or an app running in the connected device 200 seeks to establish a connection to the target network element 240, for example. As shown in FIG. 2, the connection between the connected device 200 and the Internet access network element 230 is routed through an access of the Internet 222 to the target network element 240.

The connected device 200 is configured to execute the application 202, such as web user interface application (a web browser, for example), or a stand-alone application (a mobile app, for example), and as a result, the network traffic 280 from the connected device 200 to the target network element 240 via the local area network 220 and the Internet 222 is performed. The application 202 may automatically cause the network traffic 280, and/or, alternatively, the network traffic 280 may be generated as a result of an action by the user 206 through user interface controls of the application 202 and the connected device 200.

The connected device 200 may create the connection using a packet protocol from the application 202 of the connected device 200 to the target network element 240. The target network element 240 may include one or more servers hosting a server application enabling access by the application 202. Transmission Control Protocol/Internet Protocol (TCP/IP) is a packet protocol fundamental for internet communication. User Datagram Protocol (UDP) may also be used as a packet protocol as it offers lower latency by not requiring acknowledgment of packet receipt, making it suitable for real-time network traffic 280. QUIC is a packet protocol developed by Google^{®} that combines the low-latency benefits of UDP with improved reliability and security features, and is therefore increasingly used. Real-time Transport Protocol (RTP) is a packet protocol used for delivering audio and video over IP networks. Web Real-Time Communication (WebRTC) is a packet protocol that enables real-time communication over peer-to-peer connections. In the Internet Protocol suite, the network traffic 280 is operated in a link layer, an internet layer, and a transport layer, and the requests transmitted in the network traffic 280 are operated in an application layer.

As used herein, the term "monitoring" refers to user-approved lawful interception or monitoring of the network traffic 280 with a purpose and goal of increasing cybersecurity related to the connected device 200 and its operating environment. As the network traffic 280 is monitored, the network traffic 280 is accessed and collected between the transmitting device and the receiving device. The network traffic 280 may be monitored even if the digital data transmission units (such as messages or packets) of the network traffic 280 are addressed to the receiving device (such as the Internet access network element 230, or the target network element 240, 242). The monitoring may be implemented so that the network traffic 280 is passively monitored, i.e., the network traffic 280 is not affected by the monitoring. Alternatively, if needed, the monitoring may include a seizing of the network traffic 280, i.e., the network traffic 280 is actively influenced so that a connection and/or requests and/or responses are blocked until it may be decided whether a cybersecurity action (such as blocking of the network traffic 280) is required.

As used herein, the term "network traffic" comprises the transmission and/or reception of (digital) data between the connected device 200 and the Internet access network element 230. The network traffic 280 is transferred using digital data transmission units over a communication medium such as one or more communication channels between the connected device 200 and another network node such as the Internet access network element 230 or the target network element 240. Besides over a radio interface or a wired interface in the local area network 220, the data may be conveyed over another transmission medium (implemented by copper wires, or optical fibers, for example) on the Internet 222. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes to implement the successful and reliable network traffic 280. The communication protocols may implement a protocol stack with different conceptual protocol layers.

The network traffic 280 may be monitored by a cybersecurity client 250 operating in the Internet access network element 230. The network traffic 280 may be accessed and collected by the cybersecurity client 250. The cybersecurity client 250 may also access a data structure related to the network traffic 280 established and maintained at the Internet access network element 230 after a successful handshake sequence between the connected device 200 and the Internet access network element 230. The monitored network traffic 280 may be analyzed in order to perform an appropriate cybersecurity operation by the cybersecurity client 250, possibly augmented by a cybersecurity server 252 operating in a networked computing resource 254. Machine learning algorithms may use a number of other data items (such as device-specific unique radio interface characteristics, and other active and historic unique identifiers related to the connected device 200 and its communication) to enable the device identification.

The Internet 222 uses the Internet Protocol suite including TCP/IP and UDP/IP to globally connect computer networks so that communication is enabled between the connected devices 200 and various Internet services. The Internet 222 comprises public networks, private networks, academic networks, business networks, government networks, etc. interlinked with various networking technologies.

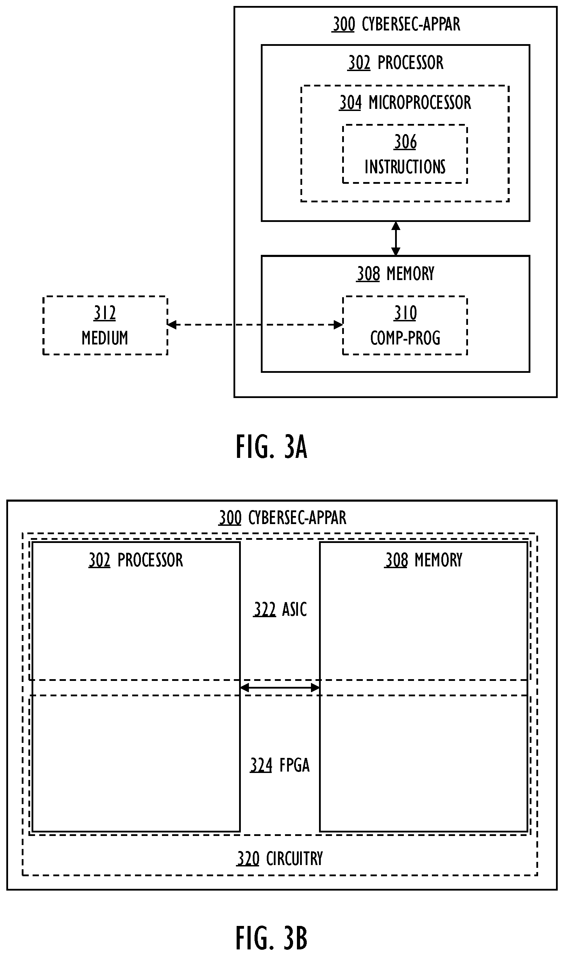

FIG. 3A and FIG. 3B are block diagrams illustrating examples of a cybersecurity apparatus 300. The method described with reference to FIG. 1A, and FIG. 1B may be implemented by the cybersecurity apparatus 300 acting as the monitoring system 290. The apparatus 300 may execute the operations defined in the method. The apparatus 300 may implement an algorithm, which includes the operations of the method, but may optionally include other operations related to the cybersecurity in general. Note that the method described with reference to FIG. 1A and FIG. 1B may be implemented as a part of the cybersecurity client 250 running in the Internet access network element 230 as shown in FIG. 2. As shown in FIG. 2, the cybersecurity apparatus 300 may comprise various distributed actors 250, 252 communicatively coupled 270 with each other.

The operations of the method may be implemented in connection with various other aspects of cybersecurity operations, such as a device identification, device intelligence, household intelligence, and application detection, for example.

Various intelligent or algorithmic technologies executed in the monitoring system 290 may be used for the implementation of the method/algorithm, including but not limited to artificial intelligence (AI), machine learning (ML), and rule-based logic.

The monitoring system 290 may utilize AI-based logic to analyze the network traffic 280 and identify the embedded unique identifiers 204. This may include adaptive decision-making processes that learn from traffic patterns and dynamically adjust detection strategies based on observed behaviors, protocol usage, or traffic anomalies.

A neural network model may be trained on labeled network traffic data to detect the presence of the unique identifiers 204. The model may learn to recognize patterns in protocol fields or payload structures, enabling it to generalize across different signaling formats and protocols.

A machine learning system may extract features from network packets, such as timing, size, protocol type, and payload characteristics, and use these to train a classifier (e.g., decision tree, random forest, or support vector machine) to determine whether a packet or session contains the unique identifier 204.

Deep learning models, such as convolutional neural networks (CNNs) or recurrent neural networks (RNNs), may be applied to raw or minimally processed network traffic data. These models may automatically learn complex representations of traffic patterns and detect the unique identifiers 204 even when they are embedded in obfuscated or non-standard formats.

A rule-based engine may be used to detect the unique identifiers 204 based on predefined patterns or conditions. For example, the monitoring system 290 may inspect DNS queries for specific subdomain formats or HTTP headers for known identifier keys. This approach is particularly effective when the signaling format is consistent and well-defined.

Unsupervised learning techniques such as clustering may be used to group similar traffic flows and identify outliers that may contain the unique identifiers 204. This approach is useful for exploratory analysis or when labelled data is unavailable, allowing the system to detect novel or evolving signaling methods.

The cybersecurity apparatus 300 comprises one or more memories 308, and one or more processors 302 coupled to the one or more memories 308 configured to execute the operations described in FIG. 1A, and FIG. 1B.

The term "processor" 302 refers to a device that is capable of processing data. The term "memory" 308 refers to a device that is capable of storing data run-time (= working memory) or permanently (= non-volatile memory).

As shown in FIG. 3A, the one or more processors 302 may be implemented as one or more microprocessors 304, which are configured to execute instructions 306 of a computer program 310 stored on the one or memories 308. The microprocessor 304 implements functions of a central processing unit (CPU) on an integrated circuit. The CPU is a logic machine executing the instructions 306 of the computer program 310. The CPU may comprise a set of registers, an arithmetic logic unit (ALU), and a control unit (CU). The control unit is controlled by a sequence of the instructions 306 transferred to the CPU from the (working) memory 308. The control unit may contain a number of microinstructions for basic operations. The implementation of the microinstructions may vary, depending on the CPU design. The one or more microprocessors 304 may be implemented as cores of a single processor and/or as separate processors. Note that the term "microprocessor" is considered as a general term including, but not being limited to a digital signal processor (DSP), a neural processing unit (NPU), a quantum processing unit (QPU), a digital signal controller, a graphics processing unit (GPU), a system on a chip, a microcontroller unit (MCU), a special-purpose computer chip, and other computing architectures employing at least partly microprocessor technology. The memory 308 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 310 may be written ("coded") by a suitable programming language, and the resulting executable code may be stored in the memory 308 and executed by the one or more microprocessors 304.

The computer program 310 implements the method/algorithm. The computer program 310 may be coded using a programming language, which may be a high-level programming language, such as C, C++, Python, Go, Rust, and P4, or with a low-level programming language, such as an assembler or a machine language. The computer program 310 may be in source code form, object code form, executable file, or in some intermediate form, but for use in the one or more microprocessors 304 it is in an executable form as an application. There are many ways to structure the computer program 310: the operations may be divided into modules, sub-routines, methods, classes, objects, applets, macros, etc., depending on the software design methodology and the programming language used. In modern programming environments, there are software libraries, i.e., compilations of ready-made functions, which may be utilized by the computer program 310 for performing a wide variety of standard operations. In addition, an operating system (such as a general-purpose operating system) may provide the computer program 310 with system services. A development environment may host various tools and frameworks, one example being GitHub^{®}.

As shown in FIG. 3A, a computer-readable medium 312 may store the computer program 310, which, when executed by the apparatus 300 (the computer program 310 may first be loaded into the one or more microprocessors 304 as the instructions 306 and then executed by one or more microprocessors 304), causes the apparatus 300 (or the one or more microprocessors 304) to carry out the method/algorithm. The computer-readable medium 312 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 310 to the one or memories 308 of the apparatus 300. In some jurisdictions, depending on the legislation and the patent practice, the computer-readable medium 312 may not be the wired or wireless telecommunications signal. The computer program 310 may be implemented as a computer program product comprising instructions which, when executed by the apparatus 300, cause the apparatus 300 to carry out the method.

As shown in FIG. 3B, the one or more processors 302 and the one or more memories 308 may be implemented by a circuitry 320. A non-exhaustive list of implementation techniques for the circuitry 320 includes, but is not limited to application-specific integrated circuits (ASICs) 322, field-programmable gate arrays (FPGAs) 324, application-specific standard products (ASSPs), standard integrated circuits, logic components, and other electronics structures employing custom-made or standard electronic circuits.

Note that in modern computing environments a hybrid implementation employing both the microprocessor technology of FIG. 3A and the custom or standard circuitry of FIG. 3B is feasible.

Functionality of the apparatus 300, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

Detecting 116 the unique identifier 204 from the network traffic 280 may be performed in connection with the Internet access network element 230, such as by the cybersecurity client 250, or with the other network element 224. Using 124 the unique identifier for the subsequent network-related analysis operation may be performed by the cybersecurity client 250, and/or by the cybersecurity server 252.

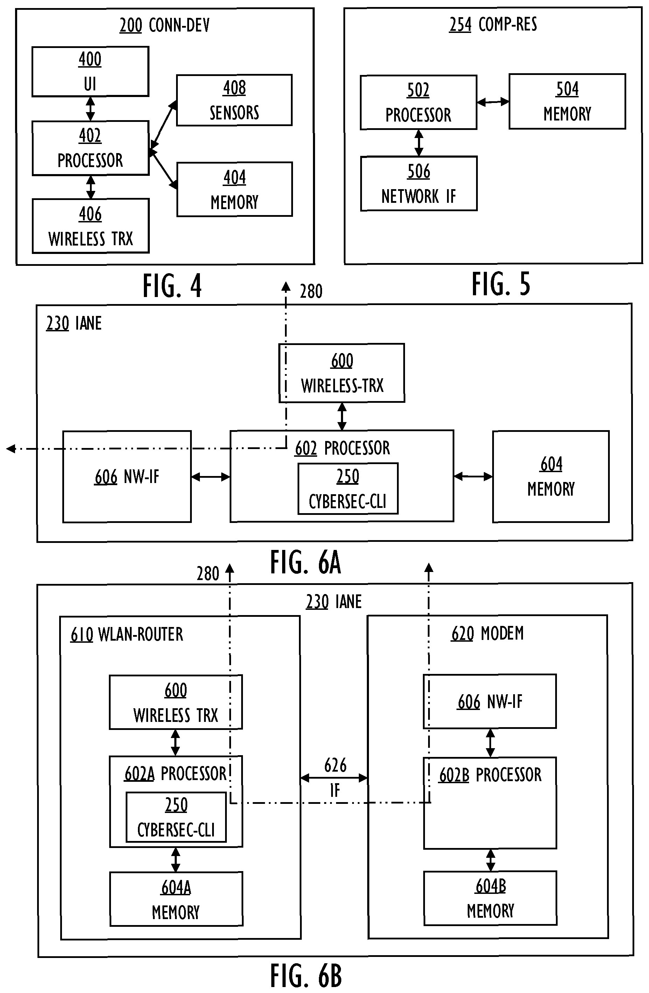

FIG. 4 is a block diagram illustrating an example of the connected device 200. The connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smart glasses, a game console, an Internet of Things (IoT) device such as a sensor or a camera, another kind of ubiquitous computing device (such as the smart television), or some other type of a wired or wireless mobile or stationary communication device operating with or without a subscriber identification module (SIM) or an embedded SIM (eSIM). The connected device 200 may be a personal communication device of the user 206.

As used herein, the term "connected device" 200 further refers to any electronic device capable of establishing communication with a network, either directly or indirectly, via wired or wireless means. Such connected devices may serve as points of interaction, data exchange, observation, control, or vulnerability within various operational contexts, including cybersecurity, network analysis, and network optimization. The term includes, but is not limited to, user-operated devices, IoT devices, smart devices with embedded processing and connectivity capabilities, client devices in distributed systems, endpoints in enterprise or cloud-based networks, and any other networked device capable of transmitting, receiving, monitoring, or processing data over public or private networks, including those connected through the Internet access network element 230. Connected devices 200 may also generate or consume telemetry, performance metrics, or control signals relevant to the monitoring, management, and optimization of network resources and security posture.

The connected device 200 comprises one or more memories 404, and one or more processors 402 coupled to the one or more memories 404 configured to carry out a functionality of the connected device 200. In addition, the connected device 200 comprises a user interface 400, and one or more wireless transceivers 406 (such as a WLAN transceiver, a cellular radio network transceiver, and a short-range radio transceiver), and also one or more sensors 408.

FIG. 5 is a block diagram illustrating an example of a computing resource 254 such as a server apparatus. The server apparatus 254 may be a networked computer server, which interoperates with the Internet access network element 230 according to a client-server architecture, a cloud computing architecture, a peer-to-peer system, or another applicable distributed computing architecture. As shown in FIG. 5, the server apparatus 254 comprises one or more memories 504, and one or more processors 502 coupled to the one or more memories 504 configured to carry out the functionality of the cybersecurity server 252. In addition, the server apparatus 254 comprises a network interface (such as an Ethernet network interface card) 506 configured to couple the server apparatus 254 to a wide area network (WAN) 222 such as Internet.

FIG. 6A and FIG. 6B are block diagrams illustrating examples of the Internet access network element 230. The Internet access network element 230 may be a customer-premises equipment (CPE) located in the household (usually at home but in some cases maybe at office) of the users 206 of the connected devices 200. Alternatively, or additionally, the Internet access network element 230 may be a public access point 230 configured to operate out of the home or the office of the users 206 as a hotspot serving the connected devices 200 in a public place such as a cafe, city center, shopping mall, airport, an arena, etc.

The Internet access network element 230 is stationary equipment connected to a telecommunication circuit of a carrier such as the network service provider (NSP) offering internet access using broadband or fixed wireless technologies at a demarcation point. The demarcation point may be defined as a point at which the public Internet 222 ends and connects with the local area network 220 at the home or office. In this way, the Internet access network element 230 acts as a network bridge, and/or a router.

In an example, the Internet access network element 230 is an edge router. The edge router connects the internal local area network 220 to the Internet 222, and is positioned at the boundary of a network. The edge router may include a neural processing unit designed to accelerate machine learning and artificial intelligence tasks. With the increased processing power, the edge router processes data locally, reducing latency and improving performance. Processing data at the edge router enhances privacy and security by minimizing the amount of data sent over the Internet 222. The edge router plays a crucial role in managing network traffic by intercepting and analyzing data packets at the boundary of the network. The edge router ensures an efficient routing, prioritizes critical traffic, and implements security measures to protect the network. By monitoring network traffic 280, the edge router may detect anomalies, optimize performance, and maintain the quality of service for applications.

The Internet access network element 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) local area network 220 and thus enabling user 206 of the connected device 200 to access communication services of the NSP, and the Internet 222. Note that the Internet access network element 230 may also be implemented with wireless technology, such as a 4G or 5G Internet access network element 230 configured to exchange a 5G cellular radio network signal with the Internet 222 accessible via a base station operated by the broadband service provider, and generate a Wi-Fi^{®} (or WLAN) or wired signal to implement the local area network 220 to provide access for the connected device 200. Furthermore, the 4G/5G Internet access network element 230 performs the conversion between the 4G/5G cellular radio network signal and the Wi-Fi^{®} or wired signal.

In FIG. 6A, the Internet access network element 230 is an integrated apparatus comprising one or more memories 604, and one or more processors 602 coupled to the one or more memories 604 configured to carry out a part of the method/algorithm in some examples. Additionally, the Internet access network element 230 comprises a wireless radio transceiver 600 configured to create the wireless local area network 220 for enabling access by the connected device 200. The Internet access network element 230 also comprises a network interface 606 to act as a modem configured to connect to the telecommunication circuit of the carrier at the demarcation point, i.e., to the Internet 222. The network interface 606 may operate as a Digital Subscriber Line (DSL) modem using different variants such as Very high bitrate DSL (VDSL), Symmetric DSL (SDSL), or Asymmetric DSL (ADSL). The network interface 606 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The Internet access network element 230 may be running the cybersecurity client 250.

In FIG. 6B, the Internet access network element 230 is a two-part apparatus. A WLAN router part 610 comprises the one or more memories 604A, the one or more processors 602A coupled to the one or more memories 604A configured to carry out the method/algorithm, and the wireless transceiver 600 to create the local area network 220 for enabling access by the connected device 200. A modem part 620 comprises the one or more processors 602B coupled to one or more memories 604B configured to carry out modem operations, and the network interface 606 to act as the modem configured to connect to the Internet 222. The WLAN router part 610 may be purchased by the user 206 of the connected device 200 to gain access to a part of the method/algorithm, whereas the modem part 620 may be provided by a carrier providing the telecommunication circuit access. As shown in FIG. 6B, the WLAN router part 610 and the modem part 620 may be communicatively coupled by an interface 626 (such as a wired Ethernet interface). As shown in FIG. 6B, the platform may be provided by the one or more memories 604A, and the one or more processors 602A, but also additionally, or alternatively, by the one or more memories 604B, and the one or more processors 602B. Instead of the cybersecurity client 250 another component running on the Internet access network element 230 may be configured to run a part of the algorithm implementing the method in some examples.

The Internet access network element 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the Internet access network element 230 based also on Linux. At the time of writing of this patent application, more information regarding the OpenWrt^{®} may be found in openwrt.org. Still another alternative implementation environment is provided by the prpl Foundation. At the time of writing of this patent application, more information regarding the prpl Foundation may be found in prplfoundation.org.

As can be understood by the person skilled in the art, the method/algorithm operations may in part be distributed among the distributed software comprising the cybersecurity client 250, and the cybersecurity server 254 in different configurations. In an example, the cybersecurity client 250 communicates 270 with the cybersecurity server 252 to implement the method/algorithm functionality.

Thus, the cybersecurity client 250 may in a stand-alone fashion carry out the method/algorithm, or a part of the method/algorithm functionality may be augmented by the functionality of the cybersecurity server 252. The cybersecurity client 250 may operate as a frontend with a relatively limited resources as regards to the processor and memory, whereas the cybersecurity server 252 may operate as a backend with a relatively unlimited resources as regards to the processor and memory, and the capability to serve a very large number of the connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
generating (102), by an application executing in a connected device, a unique identifier;
inserting (110) the unique identifier into network traffic transmitted from the connected device to a target network element via an Internet access network element; and
in response to detecting (116), by a monitoring system, the unique identifier from the network traffic, using (124) the unique identifier for a subsequent network-related analysis operation.

2. The method of claim 1, further comprising:
generating (102, 104), by the application executing in the connected device, the unique identifier at an application layer; and
using (124, 126) the unique identifier for the subsequent network-related analysis operation below the application layer.

3. The method of any preceding claim, wherein generating (102), by the application executing in the connected device, the unique identifier further comprises at least one of:
randomly generating (106) a string; and
deriving (108) a hash from one or more device-specific parameters of the connected device.

4. The method of any preceding claim, further comprising:
inserting (110, 112) the unique identifier using an in-band signaling mechanism into the network traffic transmitted from the connected device to the target network element via the Internet access network element.

5. The method of any preceding claim, further comprising:
inserting (110, 114) the unique identifier with a predefined signal recognizable by the monitoring system into the network traffic transmitted from the connected device to the target network element via the Internet access network element; and
detecting (116, 118), by the monitoring system, the predefined signal recognizable by the monitoring system and the unique identifier from the network traffic.

6. The method of any preceding claim, wherein detecting (116), by the monitoring system, the unique identifier from the network traffic further comprises one or more of:
monitoring (120), by the Internet access network element, the network traffic on a local area network of the Internet access network element; and
monitoring (122), by another network element, the network traffic on a wide area network.

7. The method of any preceding claim, wherein using (124) the unique identifier for the subsequent network-related analysis operation further comprises:
gathering (128) network link information of one or more network links that are associated with the unique identifier.

8. The method of claim 7, wherein gathering (128) the network link information of the one or more network links that are associated with the unique identifier further comprises:
detecting (130) an Internet Protocol, IP, address of the connected device that transmitted the network traffic containing the unique identifier; and
gathering (132) the network link information of the one or more network links that are associated with the IP address.

9. The method of claim 7 or 8, wherein using (124) the unique identifier for the subsequent network-related analysis operation further comprises:
storing (134) the network link information in an anonymized manner with the unique identifier at one or more of the Internet access network element, and a networked computing resource.

10. The method of claim 9, wherein using (124) the unique identifier for the subsequent network-related analysis operation further comprises:
retrieving (136), by the application, the network link information without transferring personally identifiable information.

11. The method of claim 10, wherein retrieving (136), by the application, the network link information without transferring the personally identifiable information further comprises:
using (138) the unique identifier as a lookup key by the application to retrieve the network link information.

12. The method of any preceding claim 7 to 11, wherein using (124) the unique identifier for the subsequent network-related analysis operation further comprises:
pairing (140) the application with the one or more network links.

13. The method of any preceding claim 7 to 12, wherein using (124) the unique identifier for the subsequent network-related analysis operation further comprises:
analyzing (142) a network session that comprises the one or more network links that are associated with the unique identifier.

14. The method of any preceding claim, wherein using (124) the unique identifier for the subsequent network-related analysis operation further comprises:
performing (152) one or more of an expected network quality analysis, a root cause analysis, an available upgrade analysis, a security concern analysis, and a fraud concern analysis.

15. The method of any preceding claim, wherein using (124) the unique identifier for the subsequent network-related analysis operation further comprises:
identifying (154) the connected device associated with the unique identifier.

16. The method of claim 15, further comprising:
storing (146) the unique identifier on the connected device for use in future network traffic transmitted by the connected device.

17. The method of claim 15 or 16, further comprising:
inserting (110, 148) the unique identifier with one or more of a make and a model of the connected device, and an operating system version of the connected device into the network traffic transmitted from the connected device to the target network element via the Internet access network element; and
detecting (116, 150), by the monitoring system, the unique identifier and the one or more of the make and the model of the connected device, and the operating system version of the connected device from the network traffic.

18. An apparatus comprising means for carrying out the method of any preceding claim 1-17.

19. A computer program product comprising instructions which, when executed by an apparatus, cause the apparatus to carry out the method of any preceding claim 1-17.

20. A computer-readable medium comprising a computer program with instructions which, when executed by an apparatus, cause the apparatus to carry out the method of any preceding claim 1-18.
